(19) Europäisches Patentamt / European Patent Office / Office européen des brevets

(11) **EP 4 459 775 A1**

(12) **EUROPEAN PATENT APPLICATION**
published in accordance with Art. 153(4) EPC

(43) Date of publication:
**06.11.2024 Bulletin 2024/45**

(21) Application number: **22915726.8**

(22) Date of filing: **14.12.2022**

(51) International Patent Classification (IPC):
*H01M 50/403* (2021.01)      *H01M 50/42* (2021.01)
*H01M 50/434* (2021.01)      *H01M 50/443* (2021.01)
*H01M 50/446* (2021.01)      *H01M 50/451* (2021.01)
*H01M 50/489* (2021.01)

(52) Cooperative Patent Classification (CPC):
H01M 50/403; H01M 50/42; H01M 50/434;
H01M 50/443; H01M 50/446; H01M 50/451;
H01M 50/489; Y02E 60/10

(86) International application number:
**PCT/JP2022/046087**

(87) International publication number:
**WO 2023/127502 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2021   JP 2021214826**

(71) Applicant: **Zeon Corporation
Tokyo 100-8246 (JP)**

(72) Inventor: **KITAZAWA, Yuzo
Tokyo 100-8246 (JP)**

(74) Representative: **Maiwald GmbH
Elisenhof
Elisenstraße 3
80335 München (DE)**

(54) **BINDER COMPOSITION FOR NONAQUEOUS SECONDARY BATTERY FUNCTIONAL LAYERS, SLURRY COMPOSITION FOR NONAQUEOUS SECONDARY BATTERY FUNCTIONAL LAYERS, FUNCTIONAL LAYER FOR NONAQUEOUS SECONDARY BATTERIES, NONAQUEOUS SECONDARY BATTERY MEMBER, AND NONAQUEOUS SECONDARY BATTERY**

(57)    A binder composition for a non-aqueous secondary battery functional layer contains a water-soluble polymer that has a 10% molecular weight of 100,000 or less and that has a storage elastic modulus $E^5$ at a temperature of 50°C and a relative humidity of 5% and a storage elastic modulus $E^{50}$ at a temperature of 50°C and a relative humidity of 50% that satisfy a specific relationship.

EP 4 459 775 A1

**Description**

TECHNICAL FIELD

The present disclosure relates to a binder composition for a non-aqueous secondary battery functional layer, a slurry composition for a non-aqueous secondary battery functional layer, a functional layer for a non-aqueous secondary battery, a non-aqueous secondary battery member, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. A secondary battery typically includes non-aqueous secondary battery members (hereinafter, also referred to simply as "battery members") such as electrodes (positive electrode and negative electrode) and a separator that isolates the positive electrode and the negative electrode from each other.

A battery member of a secondary battery may be a member that includes a functional layer for a non-aqueous secondary battery (hereinafter, also referred to simply as a "functional layer") containing a binder and optionally containing particles (hereinafter, referred to as "functional particles") compounded so as to cause the battery member to display a desired function. Specifically, a separator of a secondary battery may be a separator that includes an adhesive layer containing a binder and/or a heat-resistant layer containing a binder and inorganic particles as functional particles on a separator substrate.

In recent years, attempts have been made to improve binder compositions used in functional layer formation in order to achieve further improvement of secondary battery performance (for example, refer to Patent Literature (PTL) 1 to 4). Specifically, PTL 1 to 4 each propose a composition in which a water-soluble polymer capable of displaying various suitable attributes is compounded.

CITATION LIST

Patent Literature

PTL 1: WO2011/002016A1
PTL 2: WO2015/122322A1
PTL 3: JP2018-026266A
PTL 4: JP2019-57486A

SUMMARY

(Technical Problem)

It is desirable for a functional layer that is included in a secondary battery to have low water content and excellent heat resistance. However, it has not been possible to achieve a balance of reduction of water content and excellent heat resistance to sufficiently high levels in a functional layer formed using a conventional composition such as described above.

Accordingly, one object of the present disclosure is to provide a binder composition for a non-aqueous secondary battery functional layer and a slurry composition for a non-aqueous secondary battery functional layer that can form a functional layer having low water content and excellent heat resistance.

Another object of the present disclosure is to provide a functional layer that has low water content and excellent heat resistance and a non-aqueous secondary battery member that includes this functional layer.

Yet another object of the present disclosure is to provide a non-aqueous secondary battery that includes a non-aqueous secondary battery member including a functional layer having low water content and excellent heat resistance.

(Solution to Problem)

The inventor conducted diligent investigation with the aim of solving the problem set forth above. The inventor made a new discovery that in the case of a binder composition for a non-aqueous secondary battery functional layer containing a water-soluble polymer that has a 10% molecular weight of 100,000 or less and that has a storage elastic modulus $E^5$ at a temperature of 50°C and a relative humidity of 5% and a storage elastic modulus $E^{50}$ at a temperature of 50°C and a relative humidity of 50% that satisfy a specific relationship, this binder composition for a non-aqueous secondary battery functional layer can form a functional layer having low water content and excellent heat resistance. In this manner, the inventor completed the present disclosure.

Specifically, with the aim of advantageously solving the problem set forth above, [1] a presently disclosed binder composition for a non-aqueous secondary battery functional layer comprises a water-soluble polymer, wherein the water-soluble polymer has a 10% molecular weight of 100,000 or less, and the water-soluble polymer satisfies formula (1), shown below,

$$0.300 \leq (E^5 - E^{50})/E^5 \leq 0.990 \cdots (1)$$

given that $E^5$ is a storage elastic modulus of the water-soluble polymer at a temperature of 50°C and a relative humidity of 5% and $E^{50}$ is a storage elastic modulus of the water-soluble polymer at a temperature of 50°C and a relative humidity of 50%.

Through a binder composition containing a water-soluble polymer that has a 10% molecular weight of 100,000 or less and that has a storage elastic modulus $E^5$ at a temperature of 50°C and a relative humidity of 5% and a storage elastic modulus $E^{50}$ at a temperature of 50°C and a relative humidity of 50% satisfying a relationship $0.300 \leq (E^5 - E^{50})/E^5 \leq 0.990$ in this manner, it is possible to form a functional layer having low water content and excellent heat resistance.

The 10% molecular weight and each type of storage elastic modulus of a water-soluble polymer can be measured according to methods described in the EXAMPLES section of the present specification.

[2] In the binder composition for a non-aqueous secondary battery functional layer according to the foregoing [1], the water-soluble polymer preferably has a weight-average molecular weight of 700,000 or less. When the weight-average molecular weight of the water-soluble polymer is 700,000 or less, coatability of an obtained slurry composition for a functional layer can be increased.

Note that the weight-average molecular weight of a water-soluble polymer can be measured according to a method described in the EXAMPLES section of the present specification.

[3] In the presently disclosed binder composition for a non-aqueous secondary battery functional layer according to the foregoing [1] or [2], the water-soluble polymer preferably includes an amide group-containing monomer unit. When the water-soluble polymer includes an amide group-containing monomer unit, heat resistance of an obtained functional layer can be increased.

Note that a "monomer unit" of a polymer is a "repeating unit derived from the monomer that is included in a polymer obtained using that monomer".

[4] In the binder composition for a non-aqueous secondary battery functional layer according to any one of the foregoing [1] to [3], the water-soluble polymer preferably has a glass-transition temperature of 150°C or higher. When the glass-transition temperature of the water-soluble polymer is 150°C or higher, heat resistance of an obtained functional layer can be increased.

Note that the glass-transition temperature of a water-soluble polymer can be measured according to a method described in the EXAMPLES section of the present specification.

[5] In the binder composition for a non-aqueous secondary battery functional layer according to any one of the foregoing [1] to [4], the storage elastic modulus $E^5$ preferably has a value of $3 \times 10^8$ Pa or more. When the value of the storage elastic modulus $E^5$ is $3 \times 10^8$ Pa or more, heat resistance of an obtained functional layer can be increased.

[6] In the binder composition for a non-aqueous secondary battery functional layer according to any one of the foregoing [1] to [5], the water-soluble polymer preferably includes a monomer unit including an ionic functional group. When the water-soluble polymer includes a monomer unit including an ionic functional group, dispersion stability of an obtained slurry composition can be increased.

[7] In the binder composition for a non-aqueous secondary battery functional layer according to the foregoing [6], the ionic functional group is preferably a cationic group of a quaternary ammonium salt. When the water-soluble polymer includes a monomer unit including a cationic group of a quaternary ammonium salt, water content of an obtained functional layer can be even further reduced.

[8] Moreover, with the aim of advantageously solving the problem set forth above, a presently disclosed slurry composition for a non-aqueous secondary battery functional layer comprises: inorganic particles having a volume-average particle diameter of not less than 0.05 μm and not more than 0.50 μm; a solvent; and the binder composition for a non-aqueous secondary battery functional layer according to any one of the foregoing [1] to [7]. A functional layer that is formed using a slurry composition containing inorganic particles having a volume-average particle diameter of not less than 0.05 μm and not more than 0.50 μm, a solvent, and any one of the binder compositions set forth above in this manner has low water content and excellent heat resistance.

Note that the volume-average particle diameter of inorganic particles can be measured by a method described in the EXAMPLES section of the present specification.

[9] In the slurry composition for a non-aqueous secondary battery functional layer according to the foregoing [8], the inorganic particles preferably have a specific surface area of not less than 3.5 m$^2$/g and not more than 20 m$^2$/g. When the specific surface area of the inorganic particles is not less than 3.5 m$^2$/g and not more than 20 m$^2$/g, water content of an obtained functional layer can be even further reduced, and heat resistance of the functional layer can be even further increased.

Note that the specific surface area of inorganic particles refers to the "BET (Brunauer Emmett Teller) specific surface area" and can be measured by a method described in the EXAMPLES section of the present specification.

[10] Furthermore, with the aim of advantageously solving the problem set forth above, a presently disclosed functional layer for a non-aqueous secondary battery is formed using the slurry composition for a non-aqueous secondary battery functional layer according to the foregoing [8] or [9]. This functional layer has low water content and excellent heat resistance.

[11] Also, with the aim of advantageously solving the problem set forth above, a presently disclosed non-aqueous secondary battery member comprises the functional layer for a non-aqueous secondary battery according to the foregoing [10]. Through the battery member including this functional layer, it is possible to enhance cycle characteristics of a secondary battery.

[12] Moreover, with the aim of advantageously solving the problem set forth above, a presently disclosed non-aqueous secondary battery comprises the non-aqueous secondary battery member according to the foregoing [11]. A secondary battery that includes the battery member set forth above has excellent cycle characteristics.

(Advantageous Effect)

According to the present disclosure, it is possible to provide a binder composition for a non-aqueous secondary battery functional layer and a slurry composition for a non-aqueous secondary battery functional layer that can form a functional layer having low water content and excellent heat resistance.

Moreover, according to the present disclosure, it is possible to provide a functional layer that has low water content and excellent heat resistance and a non-aqueous secondary battery member that includes this functional layer.

Furthermore, according to the present disclosure, it is possible to provide a non-aqueous secondary battery that includes a non-aqueous secondary battery member including a functional layer having low water content and excellent heat resistance.

DETAILED DESCRIPTION

The following provides a detailed description of embodiments of the present disclosure.

The presently disclosed binder composition for a non-aqueous secondary battery functional layer can be used in production of the presently disclosed slurry composition for a non-aqueous secondary battery functional layer. Moreover, the presently disclosed slurry composition for a non-aqueous secondary battery functional layer can be used in formation of any functional layer (for example, an electrode mixed material layer, a heat-resistant layer, or an adhesive layer) having a function such as giving and receiving electrons, reinforcement, or adhesion inside of a non-aqueous secondary battery and can suitably be used, in particular, in formation of a heat-resistant layer. Furthermore, the presently disclosed non-aqueous secondary battery member includes a functional layer that is formed from the presently disclosed slurry composition for a non-aqueous secondary battery functional layer. Also, the presently disclosed non-aqueous secondary battery includes the presently disclosed non-aqueous secondary battery member.

(Binder composition for non-aqueous secondary battery functional layer)

The presently disclosed binder composition contains a water-soluble polymer as an essential component and can optionally contain a solvent and other components. The water-soluble polymer has a 10% molecular weight of 100,000 or less and satisfies the following formula (1) given that $E^5$ is a storage elastic modulus of the water-soluble polymer at a temperature of 50°C and a relative humidity of 5% and $E^{50}$ is a storage elastic modulus of the water-soluble polymer at a temperature of 50°C and a relative humidity of 50%.

$$0.300 \leq (E^5 - E^{50})/E^5 \leq 0.990 \cdots (1)$$

The presently disclosed binder composition can form a functional layer having low water content and excellent heat resistance as a result of containing a water-soluble polymer that satisfies the attributes described above. More specifically, the water-soluble polymer having a 10% molecular weight of 100,000 or less means that on a molecular weight distribution curve of the water-soluble polymer, the molecular weight at a position corresponding to 10% taken from a low molecular weight end is 100,000 or less. This signifies that the water-soluble polymer comprises 10% by volume of components having a molecular weight not exceeding 100,000. These low molecular weight components can function as a dispersant when a slurry composition is produced. For this reason, dispersion stability of inorganic particles in the slurry composition can be increased, thereby enabling densification and increased mechanical strength of an obtained functional layer. Consequently, the inclusion of the specific water-soluble polymer makes it possible to increase heat resistance of an obtained functional layer. The low molecular weight components of the water-soluble polymer can also protect functional groups at the surfaces of inorganic particles when a slurry composition is produced, and can thereby inhibit adsorption of water to the surfaces of the inorganic particles and enhance cycle characteristics of an obtained secondary battery. Moreover, when comparing the storage elastic modulus $E^5$ of the water-soluble polymer at a temperature of 50°C and a relative humidity of 5% and the storage elastic modulus $E^{50}$ of the water-soluble polymer at a temperature of 50°C and a relative humidity of 50%, a case in which the degree of reduction of the storage elastic modulus $E^{50}$ (rate of change of storage elastic modulus; value of $(E^5 - E^{50})/E^5$) is 0.300 or more is thought to inhibit sudden restriction of inorganic particle movement during a drying step in functional layer formation and cause densification of an obtained functional layer, thereby enabling increased heat resistance of the obtained functional layer. Furthermore, a case in which the degree of reduction of the storage elastic modulus $E^{50}$ is 0.990 or less signifies that there is not excessive adsorption of water to the water-soluble polymer and is thought to enable suppression of increased water content in an obtained functional layer.

<Water-soluble polymer>

The water-soluble polymer is required to have a 10% molecular weight of 100,000 or less and to satisfy the following formula (1) given that $E^5$ is a storage elastic modulus of the water-soluble polymer at a temperature of 50°C and a relative humidity of 5% and $E^{50}$ is a storage elastic modulus of the water-soluble polymer at a temperature of 50°C and a relative humidity of 50%.

$$0.300 \leq (E^5 - E^{50})/E^5 \leq 0.990 \cdots (1)$$

«10% molecular weight of water-soluble polymer»

The 10% molecular weight of the water-soluble polymer is required to be 100,000 or less, is preferably 70,000 or less, and more preferably 40,000 or less, and is preferably 3,000 or more, more preferably 5,000 or more, and even more preferably 10,000 or more. When the 10% molecular weight of the water-soluble polymer is not more than any of the upper limits set forth above, heat resistance of an obtained functional layer can be increased. Moreover, when the 10% molecular weight of the water-soluble polymer is not less than any of the lower limits set forth above, water content of an obtained functional layer can be even further reduced. Note that the 10% molecular weight of the water-soluble polymer can be adjusted based on conditions (temperature, time, additive amount and additive timing of polymerization initiator, etc.) in synthesis of the water-soluble polymer.

«Storage elastic modulus of water-soluble polymer»

The value of the storage elastic modulus $E^5$ of the water-soluble polymer at a temperature of 50°C and a relative humidity of 5% is preferably $3 \times 10^8$ Pa or more, and more preferably $5 \times 10^8$ Pa or more. Note that the upper limit for the value of the storage elastic modulus $E^5$ is preferably $1 \times 10^{10}$ Pa or less, and more preferably $6 \times 10^9$ Pa or less. When the value of the storage elastic modulus $E^5$ is not less than any of the lower limits set forth above, heat resistance of an obtained functional layer can be even further increased. Moreover, when the value of the storage elastic modulus $E^5$ is not more than any of the upper limits set forth above, the formation of cracks in an obtained functional layer can be effectively suppressed. Holistic control of storage elastic modulus values of the water-soluble polymer can be performed according to the type, chemical composition, molecular weight, and so forth of the water-soluble polymer.

<<Change of elastic modulus of water-soluble polymer>>

The water-soluble polymer is required to satisfy the following formula (1) given that $E^5$ is the storage elastic modulus of the water-soluble polymer at a temperature of 50°C and a relative humidity of 5% and $E^{50}$ is the storage elastic modulus of the water-soluble polymer at a temperature of 50°C and a relative humidity of 50%.

$$0.300 \leq (E^5 - E^{50})/E^5 \leq 0.990 \cdots (1)$$

Moreover, the value of $(E^5 - E^{50})/E^5$ more preferably satisfies the following formula (2).

$$0.500 \leq (E^5 - E^{50})/E^5 \leq 0.990 \cdots (2)$$

Furthermore, the value of $(E^5 - E^{50})/E^5$ even more preferably satisfies the following formula (3).

$$0.590 \leq (E^5 - E^{50})/E^5 \leq 0.990 \cdots (3)$$

When the value of $(E^5 - E^{50})/E^5$ is not less than any of the lower limits set forth above, heat resistance of an obtained functional layer can be increased. Moreover, when the value of $(E^5 - E^{50})/E^5$ is not more than the upper limit set forth above, increase of water content of an obtained functional layer can be suppressed.

«Weight-average molecular weight of water-soluble polymer»

The weight-average molecular weight of the water-soluble polymer is preferably 700,000 or less, more preferably 500,000 or less, and even more preferably 400,000 or less, and is preferably 200,000 or more, and more preferably 250,000 or more. When the weight-average molecular weight is not more than any of the upper limits set forth above, viscosity increase can be suppressed when a slurry composition is produced, and coatability can be increased. Moreover, when the weight-average molecular weight is not less than any of the lower limits set forth above, heat resistance of an obtained functional layer can be even further increased, and comparatively high molecular weight components of the water-soluble polymer make it possible for the water-soluble polymer to display a thickening effect with respect to a binder composition and a slurry composition and also to display an adhesion effect well when used in a slurry composition. The weight-average molecular weight of the water-soluble polymer can be adjusted based on conditions (particularly amount of polymerization initiator, amount of molecular weight modifier, chemical composition of monomers, temperature, time, etc.) in synthesis of the water-soluble polymer.

«Chemical composition of water-soluble polymer»

No specific limitations are placed on the chemical composition of the water-soluble polymer so long as the 10% molecular weight and the value of $(E^5 - E^{50})/E^5$ satisfy the essential conditions set forth above. For example, the water-soluble polymer can include an amide group-containing monomer unit, a monomer unit including an ionic functional group, and other monomer units that are copolymerizable with these monomer units. In particular, it is preferable that the water-soluble polymer includes either or both of an amide group-containing monomer unit and a monomer unit including an ionic functional group, and more preferable that the water-soluble polymer includes both an amide group-containing monomer unit and a monomer unit including an ionic functional group. The inclusion of an amide group-containing monomer unit in the water-soluble polymer raises the glass-transition temperature of the water-soluble polymer and makes it possible to even further increase heat resistance of an obtained functional layer. Moreover, the inclusion of a monomer unit including an ionic functional group in the water-soluble polymer causes electrostatic interaction with functional groups at the surfaces of inorganic particles in a slurry composition and facilitates adsorption of the water-soluble polymer to the surfaces of the inorganic particles. As a result, water content of an obtained functional layer can be even further reduced.

[Amide group-containing monomer unit]

Examples of amide group-containing monomers that can form an amide group-containing monomer unit include methacrylamide, acrylamide, dimethylacrylamide, diethylacrylamide, diacetone acrylamide, hydroxyethyl acrylamide, hydroxymethyl acrylamide, hydroxypropyl acrylamide, and hydroxybutyl acrylamide. One of these amide group-containing monomers may be used individually, or two or more of these amide group-containing monomers may be used in combination in a freely selected ratio. Of these amide group-containing monomers, acrylamide is preferable from a viewpoint of heat resistance.

The content of amide group-containing monomer units in the water-soluble polymer when all repeating units forming the water-soluble polymer are taken to be 100 mass% is preferably 75 mass% or more, and more preferably 80 mass% or more, and is preferably 99 mass% or less, more preferably 95 mass% or less, and even more preferably 90.0 mass% or less. When the content of amide group-containing monomer units in the water-soluble polymer is not less than any of the lower limits set forth above, heat resistance of an obtained functional layer can be even further increased. Moreover, when the content of amide group-containing monomer units in the water-soluble polymer is not more than any of the upper limits set forth above, dispersibility of inorganic particles when a slurry composition is produced can be even further increased. Furthermore, when the content of amide group-containing monomer units in the water-soluble polymer is not more than any of the upper limits set forth above, there are instances in which water content of a functional layer can be even further reduced.

Note that the content of amide group-containing monomer units in a water-soluble polymer can be measured by a nuclear magnetic resonance (NMR) method such as $^1$H-NMR.

[Monomer unit including ionic functional group]

Examples of monomers including an ionic functional group that can form a monomer unit including an ionic functional group include monomers that include a cationic functional group and monomers that include an anionic functional group. Examples of monomers including a cationic functional group include monomers including a cationic group of a quaternary ammonium salt such as (meth)acryloyloxyethyltrimethylammonium chloride, (meth)acryloylaminopropyltrimethylammonium chloride, (meth)acryloyloxyethyltrimethylammonium methyl sulfate, (meth)acryloylaminopropyltrimethylammonium methyl sulfate, and diallyldimethylammonium chloride. One of these monomers may be used individually, or two or more of these monomers may be used in combination in a freely selected ratio. Of these monomers, diallyldimethylammonium chloride is preferable from a viewpoint of even further reducing water content of an obtained functional layer.

Examples of monomers including an anionic functional group include monocarboxylic acids such as acrylic acid and methacrylic acid, dicarboxylic acids such as maleic acid and itaconic acid, sulfo group-containing monomers such as acrylamido t-butyl sulfonic acid, 2-acrylamido-2-methylpropane sulfonic acid, and sodium p-styrenesulfonate, and phosphate group-containing monomers such as 2-(meth)acryloyloxyethyl phosphate and methyl-2-(meth)acryloyloxyethyl phosphate. One of these monomers may be used individually, or two or more of these monomers may be used in combination in a freely selected ratio. Of these monomers, acrylic acid is preferable from a viewpoint of even further reducing water content of an obtained functional layer.

The content of monomer units including an ionic functional group in the water-soluble polymer when all repeating units forming the water-soluble polymer are taken to be 100 mass% is preferably 1 mass% or more, more preferably 2 mass% or more, and even more preferably 10 mass% or more, and is preferably 25 mass% or less, and more preferably 20 mass% or less. When the proportion constituted by monomer units including an ionic functional group in the water-soluble polymer is not less than any of the lower limits set forth above, dispersion stability when a slurry composition is produced can be even further increased. Moreover, when the proportional content of monomer units including an ionic functional group in the water-soluble polymer is not more than any of the upper limits set forth above, water content of an obtained functional layer can be even further reduced.

[Other monomer units]

Examples of other monomer units that can be included in the water-soluble polymer include, but are not specifically limited to, a nitrile group-containing monomer unit and a (meth)acrylic acid ester monomer unit.

Examples of nitrile group-containing monomers that can form a nitrile group-containing monomer unit include, but are not specifically limited to, $\alpha,\beta$-ethylenically unsaturated nitrile monomers. Examples of $\alpha,\beta$-ethylenically unsaturated nitrile monomers include acrylonitrile, $\alpha$-chloroacrylonitrile, $\alpha$-bromoacrylonitrile, methacrylonitrile, and $\alpha$-ethylacrylonitrile. One of these nitrile group-containing monomers may be used individually, or two or more of these nitrile group-containing monomers may be used in combination in a freely selected ratio.

The content of other monomer units included in the water-soluble polymer when all repeating units forming the water-soluble polymer are taken to be 100 mass% is preferably 5 mass% or less. This is because heat resistance of an obtained functional layer can be even further increased. Although it may be the case that the water-soluble polymer does not include other monomer units, in a case in which the water-soluble polymer does include other monomer units, the content of the other monomer units may be 0.5 mass% or more when all repeating units forming the water-soluble polymer are taken to be 100 mass%.

«Glass-transition temperature of water-soluble polymer»

The glass-transition temperature of the water-soluble polymer is preferably 130°C or higher, and more preferably 150°C or higher, and is preferably 300°C or lower, and more preferably 250°C or lower. When the glass-transition temperature of the water-soluble polymer is not lower than any of the lower limits set forth above, heat resistance of an obtained functional layer can be even further increased. Moreover, when the glass-transition temperature of the water-soluble polymer is not higher than any of the upper limits set forth above, shedding of inorganic particles from a functional layer when a functional layer is formed can be effectively suppressed. Note that the glass-transition temperature of the water-soluble polymer can be adjusted based on the chemical composition, molecular weight, and so forth.

**<<Production method of water-soluble polymer>>**

The water-soluble polymer can be produced by, for example, performing polymerization of a monomer composition containing the above-described monomers in an aqueous solvent. The aqueous solvent can be water, a mixture of water and a water-miscible organic solvent, an aqueous buffer solution, an acidic aqueous solution, a basic aqueous solution, or the like. The polymerization method can be any method such as solution polymerization, suspension polymerization, bulk polymerization, or emulsion polymerization, for example, without any specific limitations. The polymerization reaction format may be ionic polymerization, radical polymerization, living radical polymerization, or the like, for example. Additives such as a polymerization initiator, a molecular weight modifier, and a polymerization accelerator used in the polymerization can be any of those that are typically used. The amounts of these additives may also be the same as typically used. The polymerization conditions can be adjusted as appropriate depending on the polymerization method, the type of polymerization initiator, and so forth such that the desired molecular weight distribution is achieved.

<Solvent>

The presently disclosed binder composition can contain water as a solvent. Note that in a case in which the presently disclosed binder composition contains a solvent, this solvent may be a reaction solvent that was used in production of the water-soluble polymer.

<Other components>

The presently disclosed binder composition can contain components other than the above-described components (i.e., other components). The binder composition may contain a polymer component that does not correspond to the water-soluble polymer described above. For example, the binder composition may contain a known particulate binder such as a styrene-butadiene random copolymer or an acrylic polymer. Moreover, the binder composition may contain known additives. Examples of such known additives include antioxidants, defoamers, and surfactants. One of these other components may be used individually, or two or more of these other components may be used in combination in a freely selected ratio.

<Production method of binder composition>

The presently disclosed binder composition can be produced by mixing the water-soluble polymer and the optional components described above without any specific limitations. Note that in a case in which the binder composition does not contain other components besides the water-soluble polymer and a solvent, the produced water-soluble polymer can be used in that form as the binder composition.

(Slurry composition for non-aqueous secondary battery functional layer)

The presently disclosed slurry composition is a composition that is used for forming a functional layer, that contains inorganic particles having a volume-average particle diameter of not less than 0.05 $\mu$m and not more than 0.50 $\mu$m, a solvent, and the binder composition set forth above, and that optionally contains other components besides those previously listed. The presently disclosed slurry composition can form a functional layer having low water content and excellent heat resistance as a result of containing the binder composition set forth above.

<Binder composition>

The binder composition is the presently disclosed binder composition set forth above.
The amount of the binder composition can be set such that when the amount of the inorganic particles is taken to be 100 mass%, the amount of the water-soluble polymer in the slurry composition is preferably 0.5 mass% or more, and more preferably 1.0 mass% or more, and is preferably 5.0 mass% or less, and more preferably 3.0 mass% or less. When the amount of the water-soluble polymer in the slurry composition is not less than any of the lower limits set forth above, heat resistance of an obtained functional layer can be even further increased. Moreover, when the amount of the water-soluble polymer in the slurry composition is not more than any of the upper limits set forth above, water content of an obtained functional layer can be even further reduced.

<Inorganic particles>

The volume-average particle diameter of the inorganic particles is required to be not less than 0.05 $\mu$m and not more than 0.50 $\mu$m, and is more preferably not less than 0.10 $\mu$m and not more than 0.45 $\mu$m. When the volume-average particle diameter of the inorganic particles is not less than any of the lower limits set forth above, water content of a functional layer can be even further reduced. Moreover, when the volume-average particle diameter of the inorganic particles is not more than any of the upper limits set forth above, reduction of heat resistance of a functional layer can be suppressed. By using the presently disclosed binder composition in combination with inorganic particles having a small particle diameter as described above, effects such as reduction of water content of a functional layer, improvement of heat resistance of a functional layer, and improvement of cycle characteristics of a secondary battery can be displayed well. This is because although inorganic particles of small particle diameter tend to have a large amount of adsorbed water due to increased specific surface area, the presently disclosed binder composition can increase dispersibility of the inorganic particles in a slurry composition and can inhibit adsorption of water to the inorganic particles as a result of low molecular weight components of the water-soluble polymer protecting the surfaces of the inorganic particles.

Examples of inorganic particles that may be used include particles of oxides such as aluminum oxide (alumina), hydrous aluminum oxide (boehmite), silicon oxide, magnesium oxide (magnesia), calcium oxide, titanium oxide (titania), $BaTiO_3$, ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clay such as talc and montmorillonite. These particles may be subjected to element substitution, surface treatment, solid solution treatment, and/or the like as necessary. One of these types of inorganic particles can be used individually, or two or more of these types of inorganic particles can be used in combination. Of these inorganic particles, alumina, boehmite, and barium sulfate are preferable.

The BET specific surface area of the inorganic particles is preferably 3.5 m$^2$/g or more, more preferably 4.0 m$^2$/g or more, and even more preferably 4.5 m$^2$/g or more, and is preferably 20 m$^2$/g or less, more preferably 19 m$^2$/g or less, and even more preferably 17 m$^2$/g or less. When the BET specific surface area is not less than any of the lower limits set forth above, heat resistance of a functional layer can be even further increased because the inorganic particles interact with one another in the functional layer and can improve mechanical strength. When the BET specific surface area is not more than any of the upper limits set forth above, water content of a functional layer can be even further reduced.

<Solvent>

The solvent of the slurry composition can be any of the same solvents as for the solvent that is an optional component of the binder composition. Note that in a case in which the binder composition contains a solvent, this solvent can be used as the solvent of the slurry composition.

<Other components>

Examples of other components that may be contained in the slurry composition include, but are not specifically limited to, the same other components as may be contained in the presently disclosed binder composition. One other component may be used individually, or two or more other components may be used in combination in a freely selected ratio. In particular, a non-ionic surfactant, an anionic surfactant, or a cationic surfactant can be contained as a surfactant. Of these surfactants, the inclusion of a non-ionic surfactant is preferable, and this non-ionic surfactant may be polyoxyethylene nonylphenyl ether, polyethylene glycol monostearate, an ethylene oxide/propylene oxide copolymer, sorbitan monostearate, or the like, for example.

In a case in which the slurry composition contains a surfactant, the content of the surfactant when the content of the inorganic particles is taken to be 100 mass% is preferably 0.05 mass% or more, and more preferably 0.1 mass% or more, and is preferably 2.0 mass% or less, and more preferably 1.0 mass% or less. When the content of the surfactant is not less than any of the lower limits set forth above, the formation of pinholes during functional layer formation can be inhibited. When the content of the surfactant is not more than any of the upper limits set forth above, peel strength and heat resistance of a functional layer can be increased.

<Production of slurry composition>

No specific limitations are placed on the method by which the slurry composition is produced. For example, the slurry composition can be produced by mixing the binder composition, the inorganic particles, and other components that are used as necessary in the presence of the solvent. Note that the aqueous medium used in production of the slurry composition is inclusive of the aqueous medium that was contained in the binder composition. The mixing may be performed using a typically used stirrer or disperser without any specific limitations on the mixing method.

<Viscosity of slurry composition>

The viscosity of the slurry composition is preferably 20 mPa·s or more, more preferably 50 mPa·s or more, and even more preferably 80 mPa·s or more, and is preferably 300 mPa·s or less, more preferably 250 mPa·s or less, and even more preferably 220 mPa·s or less. When the viscosity of the slurry composition is not less than any of the lower limits set forth above, the occurrence of poor leveling during coating of the slurry composition can be inhibited. Moreover, when the viscosity of the slurry composition is not more than any of the upper limits set forth above, coatability of the slurry composition can be increased.

(Non-aqueous secondary battery member)

The presently disclosed battery member is a member that includes a functional layer, and, more specifically, may be a separator. In a case in which the battery member is a separator, a functional layer formed using the presently disclosed slurry composition is typically a structural part referred to as a heat-resistant layer, a porous membrane layer, or the like. The functional layer that is included in the presently disclosed battery member is a layer that has been formed from the presently disclosed slurry composition set forth above. The presently disclosed functional layer has low water content and excellent heat resistance. Moreover, the presently disclosed functional layer can be formed by, for example, applying the slurry composition set forth above onto the surface of a suitable substrate to form a coating film and then drying the coating film that is formed. In other words, the presently disclosed functional layer is formed of a dried product of the slurry composition set forth above, normally contains at least the above-described water-soluble polymer and inorganic particles, and optionally contains other components. Note that components contained in the functional layer are components that were contained in the slurry composition set forth above, and thus the preferred ratio of these components is the same as the preferred ratio of the components in the slurry composition.
The presently disclosed battery member may include constituent elements other than a functional layer that is formed from the presently disclosed slurry composition set forth above and a substrate. Such constituent elements are not specifically limited and examples thereof include various layers that do not correspond to a functional layer formed from the presently disclosed slurry composition.
As a result of the presently disclosed battery member including a functional layer that has been formed from the presently disclosed slurry composition containing the presently disclosed binder composition, cycle characteristics of a secondary battery can be enhanced through the battery member.

«Substrate»

No limitations are placed on the substrate onto which the slurry composition is applied. For example, a coating film of the slurry composition may be formed on the surface of a releasable substrate, this coating film may be dried to form a functional layer, and then the releasable substrate may be peeled from the functional layer. The functional layer that is peeled from the releasable substrate in this manner can be used as a free-standing film in formation of the secondary battery member.
However, it is preferable that a separator substrate is used as the substrate from a viewpoint of increasing production efficiency of the battery member through omission of a step of peeling the functional layer. Specifically, it is preferable that the slurry composition is applied onto a separator substrate.

«Separator substrate»

The separator substrate is not specifically limited and may be a known separator substrate such as an organic separator substrate. The organic separator substrate is a porous member that is formed of an organic material. The organic separator substrate may, for example, be a microporous membrane or non-woven fabric containing a polyolefin resin such as polyethylene or polypropylene, an aromatic polyamide resin, or the like, and is preferably a microporous membrane or non-woven fabric made from polyethylene due to the excellent strength thereof.

<Production method of battery member>

Examples of methods by which the functional layer may be formed on the substrate to produce the battery member include:

(1) a method in which the presently disclosed slurry composition is applied onto the surface of the substrate and is then dried;
(2) a method in which the substrate is immersed in the presently disclosed slurry composition and is then dried; and
(3) a method in which the presently disclosed slurry composition is applied onto a releasable substrate and is dried to produce a functional layer that is then transferred onto the surface of the substrate.

Of these methods, method (1) is particularly preferable since it allows simple control of the thickness of the functional layer. In more detail, method (1) includes a step of applying the slurry composition onto the substrate (application step) and a step of drying the slurry composition that has been applied onto the substrate to form a functional layer (functional layer formation step).

«Application step»

Examples of methods by which the slurry composition can be applied onto the substrate in the application step include, but are not specifically limited to, doctor blading, reverse roll coating, direct roll coating, gravure coating, extrusion coating, and brush coating.

«Functional layer formation step»

Any commonly known method can be used without any specific limitations as the method by which the slurry composition on the substrate is dried in the functional layer formation step. Examples of drying methods that may be used include drying by warm, hot, or low-humidity air, drying in a vacuum, and drying through irradiation with infrared light, electron beams, or the like.

(Non-aqueous secondary battery)

The presently disclosed secondary battery includes the presently disclosed battery member set forth above. More specifically, the presently disclosed secondary battery includes a positive electrode, a negative electrode, a separator, and an electrolyte solution, wherein the separator is the battery member set forth above. Moreover, the presently disclosed secondary battery has excellent cycle characteristics.

<Positive electrode and negative electrode>

Known positive electrodes and negative electrodes can be used without any specific limitations as the positive electrode and the negative electrode.

<Separator>

The separator that is used in the presently disclosed secondary battery is the presently disclosed battery member set forth above.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.
The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution can be adjusted as appropriate. Furthermore, known additives may be added to the electrolyte solution.

<Production method of non-aqueous secondary battery>

The presently disclosed secondary battery set forth above can be produced by, for example, stacking the positive electrode and the negative electrode with the separator in-between, performing rolling, folding, compressing, etc. of the resultant laminate, as necessary, to place the laminate in a battery container, injecting the electrolyte solution into the battery container, and sealing the battery container. Note that at least one battery member among the positive electrode, the negative electrode, and the separator is the presently disclosed battery member that includes a functional layer formed from the presently disclosed slurry composition. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

Measurements and evaluations of various attributes in the examples and comparative examples were implemented according to the following methods.

<Weight-average molecular weight and 10% molecular weight of water-soluble polymer>

An aqueous solution containing a water-soluble polymer produced in each example or comparative example was diluted and adjusted to a concentration of 0.5%. Next, the aqueous solution was diluted to 0.025% with the eluent indicated below to prepare a sample. This sample was analyzed by gel permeation chromatography under the following conditions to prepare two types of molecular weight distribution curves and to determine the weight-average molecular weight and the 10% molecular weight of the water-soluble polymer. Specifically, the weight-average molecular weight was calculated based on a differential molecular weight distribution curve according to an established method. On the other hand, the 10% molecular weight was determined based on a cumulative molecular weight distribution curve (vertical axis: cumulative volume [%]; horizontal axis: molecular weight [g/mol]) as the molecular weight at which cumulative volume is 10%.

Apparatus: Gel permeation chromatograph GPC (Agilent 1260 Infinity II HPLC)
Detector: Differential refractive index detector RI (Agilent 1260 Infinity II)
Column: TSKgel GMPWXL $\times$ 2 columns ($\varnothing$7.8 mm $\times$ 30 cm; produced by Tosoh Corporation)
Solvent: 0.50 M Sodium acetate/0.50 M acetic acid in case of cationic polymer
0.1 M Tris buffer solution (0.1 M potassium chloride added) in case of anionic polymer
Flow rate: 0.7 mL/min
Column temperature: 40°C
Injection volume: 0.2 mL
Standard sample: Monodisperse polyethylene oxide (PEO) and polyethylene glycol (PEG) produced by Tosoh Corporation and Sigma-Aldrich

<Rate of change of storage elastic modulus of water-soluble polymer>

An aqueous solution of a water-soluble polymer obtained in each example or comparative example was dried at room temperature to obtain a film of 0.05 mm to 0.3 mm in thickness. The film was punched out as a strip shape of 10 mm in width to obtain a test specimen. The apparatus indicated below was used to apply strain to this sample through extension and to measure dynamic viscoelasticity at the temperature and humidity indicated below. In this measurement, the measurement sample was attached to a jig, and measurement was performed after 30 minutes at rest under the set humidity condition. The change of the storage elastic modulus due to humidity was determined based on the obtained measurement results.

Apparatus: MCR 302 (product name) produced by Anton Paar GmbH; CTD 180 Humidity Ready used as convection temperature control system; Universal Extensional Fixture UXF used as measurement jig; MHG100 used as humidity generator

Set temperature range: 50°C
Set humidity: 5%, 50%
Shear strain: 0.05%
Frequency: 1 Hz
Change of elastic modulus: (Storage elastic modulus $E^5$ at relative humidity of 5% - Storage elastic modulus $E^{50}$ at relative humidity of 50%)/(Storage elastic modulus $E^5$ at relative humidity of 5%)

<Glass-transition temperature of water-soluble polymer>

An aqueous solution containing a water-soluble polymer produced in each example or comparative example was subjected to 3 days of preliminary drying in an environment having a humidity of 50% and a temperature of 23°C to 26°C to prepare a film, and was then further dried in a vacuum dryer having a temperature of 120°C for 10 hours to obtain a measurement sample. The obtained measurement sample was weighed out in an amount of 5 mg to 10 mg, was sealed in a hermetically sealed aluminum pan, and was then subjected to measurement by a differential scanning calorimeter (DSC7200 produced by SII) at a heating rate of 10°C/min in a measurement temperature range of -50°C to 200°C so as to obtain a differential scanning calorimetry (DSC) curve. Note that an empty aluminum pan was used as a reference. The maximum value of a temperature at which a derivative signal (DDSC) displayed a peak in this heating process was determined as the glass-transition temperature (°C). In a case in which multiple peaks were observed, the temperature at which a peak of large DDSC signal intensity was displayed was taken to be the glass-transition temperature.

<Volume-average particle diameter of inorganic particles>

The volume-average particle diameter of inorganic particles was obtained as the particle diameter (D50) at which, in a particle diameter distribution (by volume) measured by laser diffraction in accordance with JIS Z8825, cumulative volume calculated from a small diameter end of the distribution reached 50%.

<BET specific surface area of inorganic particles>

The BET specific surface area of inorganic particles was measured using a flow-type specific surface area analyzer (FlowSorb III 2305 produced by Shimadzu Corporation).

<Viscosity of slurry composition for functional layer>

The viscosity of a slurry composition for a functional layer produced in each example or comparative example was measured by a single-cylinder rotational viscometer in accordance with JIS Z8803: 1991 (25°C; rotation speed: 60 rpm; spindle shape: 2), and a value at 60 seconds after the start of measurement was taken to be the viscosity of the slurry composition for a functional layer.

<Dispersion stability of slurry composition for functional layer>

With respect to a slurry composition for a functional layer produced in each example or comparative example, the volume-average particle diameter D50 was measured both straight after production and after 10 days at rest in order to observe the change of the volume-average particle diameter D50. The sample after 10 days at rest was taken to be a sample obtained by loading 1 kg of the slurry composition for a functional layer produced in each example or comparative example into a 1 L plastic bottle, leaving the plastic bottle at rest for 10 days, and then stirring the entire plastic bottle for 30 minutes using a mix rotor. The amount of change of the volume-average particle diameter D50 was evaluated in accordance with the following standard.

A: Amount of change of volume-average particle diameter D50 of less than 0.3 μm
B: Amount of change of volume-average particle diameter D50 of not less than 0.3 μm and not more than 0.6 μm

C: Amount of change of volume-average particle diameter D50 of more than 0.6 $\mu$m

«Measurement method of volume-average particle diameter D50»

The measurement sample was used to prepare a water dispersion having a solid content concentration of 0.1 mass%, and then a particle size distribution (by volume) was acquired using a laser diffraction particle size analyzer (SALD-7100 produced by Shimadzu Corporation). The particle diameter at which cumulative volume calculated from a small diameter end in the obtained particle size distribution reached 50% was determined.

<Heat shrinkage resistance of functional layer>

A heat-resistant layer-equipped separator produced in each example or comparative example was cut out as a square of 12 cm in width by 12 cm in length and then a square having a side length of 10 cm was drawn in an inner part of the cut-out square to obtain a test specimen. The test specimen was placed inside a 150°C constant-temperature tank, was left for 1 hour, and then the area change of the square drawn in the inner part was calculated (= {(area of square before being left - area of square after being left)/area of square before being left} $\times$ 100%) as a heat shrinkage rate and was evaluated by the following standard. A smaller heat shrinkage rate indicates that the heat-resistant layer has better heat shrinkage resistance.

A: Heat shrinkage rate of less than 10%
B: Heat shrinkage rate of not less than 10% and less than 20%
C: Heat shrinkage rate of 20% or more

<Water content of functional layer>

A heat-resistant layer-equipped separator obtained in each example or comparative example was cut out with a size of 10 cm in width by 10 cm in length to obtain a test specimen. The test specimen was left at a temperature of 25°C and a dew point of -60°C for 24 hours. Thereafter, the water content of the test specimen was measured by the Karl Fischer method (water vaporization method of JIS K-0068(2001); vaporization temperature: 150°C) using a coulometric titration water meter. The determined water content was taken to be the water content of a functional layer and was evaluated by the following standard.

A: Functional layer water content of less than 700 ppm
B: Functional layer water content of not less than 700 ppm and less than 900 ppm
C: Functional layer water content of 900 ppm or more

<High-temperature cycle characteristics of secondary battery>

A lithium ion secondary battery produced in each example or comparative example was subjected to a charge/discharge operation of charging to 4.2 V by a constant-voltage constant-current (CC-CV) method with a 0.3C charge rate (cut off condition: 0.02C) and discharging to 3.0 V by a constant-current (CC) method with a 1C discharge rate at 45°C, and the initial capacity C0 was measured.

The lithium ion secondary battery was repeatedly subjected to the same charge/discharge operation in a 45°C environment, and the capacity C1 after 300 cycles was measured. The capacity maintenance rate $\Delta$C was calculated ($\Delta$C = (C1/C0) $\times$ 100(%)) and was evaluated by the following standard. A higher value for this capacity maintenance rate indicates less reduction of discharge capacity and better high-temperature cycle characteristics.

A: Capacity maintenance rate $\Delta$C of 75% or more
B: Capacity maintenance rate $\Delta$C of not less than 60% and less than 75%
C: Capacity maintenance rate $\Delta$C of less than 60%

(Example 1)

<Production of water-soluble polymer A>

A 1 L septum-equipped flask was charged with 600 g of deionized water, 117 g of acrylamide as an amide group-containing monomer, and 24 g of diallyldimethylammonium chloride as an ionic group-containing monomer. These materials were mixed by stirring, and the inside of the flask was purged while performing bubbling with nitrogen gas at a flow rate of 50 mL/min. Next, these materials were heated to a temperature of 40°C, and 17 g of a 2.0% aqueous solution of L-ascorbic acid as a polymerization accelerator was injected into the flask using a syringe. Thereafter, 18 g of a 5.0% aqueous solution of ammonium persulfate as a polymerization initiator was added into the flask using a syringe, and the reaction temperature was set to 60°C. Once 2 hours had passed, 9 g of a 5.0% aqueous solution of ammonium persulfate as a polymerization initiator and 8 g of a 2.0% aqueous solution of L-ascorbic acid as a polymerization accelerator were added in order to further raise the reaction conversion rate. Once a further 2 hours had passed, 9 g of a 5.0% aqueous solution of ammonium persulfate as a polymerization initiator and 8 g of a 2.0% aqueous solution of L-ascorbic acid as a polymerization accelerator were added. Two hours later, 3 g of a 5% aqueous solution of sodium nitrite as a reaction inhibitor was added into the flask and was stirred to end the reaction. Thereafter, the flask was cooled to 40°C and was converted to an air atmosphere to produce an aqueous solution containing a water-soluble polymer. The weight-average molecular weight, 10% molecular weight, elastic modulus, rate of change of elastic modulus, and glass-transition temperature of the obtained water-soluble polymer were measured as previously described. The results are shown in Table 1.

<Production of slurry composition for non-aqueous secondary battery functional layer>

Alumina particles (produced by Sumitomo Chemical Co., Ltd.; product name: AKP-20; volume-average particle diameter: 0.42 $\mu$m) were used as inorganic particles.

A dispersion liquid was obtained by mixing 100 parts of the inorganic particles, 2.5 parts in terms of solid content of the aqueous solution containing the water-soluble polymer obtained as described above, and deionized water and processing these materials for 1 hour using a bead mill (produced by Ashizawa Finetech Ltd.; product name: LMZ015). In addition, 0.2 parts of a polyoxyalkylene glycol surfactant (produced by San Nopco Limited; product name: NOPTECHS E-D052) as a wetting agent was mixed therewith to produce a slurry composition for a functional layer having a solid content concentration of 40%. The viscosity and dispersion stability of the slurry composition for a functional layer obtained in this manner were evaluated. The results are shown in Table 1.

<Production of separator including heat-resistant layer at one side (heat-resistant layer-equipped separator)>

A separator substrate made of polyethylene (produced by Asahi Kasei Corporation; product name: ND412; thickness: 12 $\mu$m) was prepared as a separator substrate. The slurry composition for a functional layer produced as described above was applied onto one side of the prepared separator substrate at a rate of 10 m/min using a gravure coater and was then dried in a 50°C drying furnace to obtain a separator including a heat-resistant layer at one side (heat-resistant layer-equipped separator; heat-resistant layer thickness: 2 $\mu$m).

The heat-resistant layer-equipped separator obtained in this manner was used to evaluate heat shrinkage resistance and water content of the heat-resistant layer. The results are shown in Table 1.

<Production of negative electrode>

A 5 MPa pressure-resistant vessel equipped with a stirrer was charged with 33 parts of 1,3-butadiene as an aliphatic conjugated diene monomer, 3.5 parts of itaconic acid as a carboxy group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. The polymerization reaction was quenched by cooling at the point at which the polymerization conversion rate reached 96% to yield a mixture containing a particulate binder (styrene-butadiene copolymer). The mixture was adjusted to pH 8 through addition of 5% sodium hydroxide aqueous solution and was then subjected to thermal-vacuum distillation to remove unreacted monomer. Thereafter, the mixture was cooled to 30°C or lower to yield a water dispersion containing a binder for a negative electrode.

A planetary mixer was charged with 48.75 parts of artificial graphite (theoretical capacity: 360 mAh/g) and 48.75 parts of natural graphite (theoretical capacity: 360 mAh/g) as negative electrode active materials and 1 part (in terms of solid content) of carboxymethyl cellulose as a thickener. These materials were diluted to a solid content concentration of 60% with deionized water and were subsequently kneaded at a rotation speed of 45 rpm for 60 minutes. Thereafter, 1.5 parts in terms of solid content of the water dispersion containing the binder for a negative electrode obtained as described above was added and was kneaded therewith at a rotation speed of 40 rpm for 40 minutes. The viscosity was then adjusted to 3,000 $\pm$ 500 mPa·s (measured by B-type viscometer at 25°C and 60 rpm) through addition of deionized water to produce a slurry composition for a negative electrode mixed material layer.

The slurry composition for a negative electrode mixed material layer was applied onto the surface of copper foil of 15 $\mu$m in thickness serving as a current collector by a comma coater such as to have a coating weight of 11 $\pm$ 0.5 mg/cm$^2$. The copper foil having the slurry composition for a negative electrode mixed material layer applied thereon was subsequently conveyed inside an oven having a temperature of 80°C for 2 minutes and an oven having a temperature of 110°C for 2 minutes at a speed of 400 mm/min so as to dry the slurry composition on the copper foil and thereby obtain a negative electrode web having a negative electrode mixed material layer formed on the current collector.

Thereafter, the negative electrode mixed material layer-side of the produced negative electrode web was roll pressed with a line pressure of 11 t (tons) in an environment having a temperature of 25 ± 3°C to obtain a negative electrode having a negative electrode mixed material layer density of 1.60 g/cm$^3$.

<Production of positive electrode>

A slurry composition for a positive electrode mixed material layer was produced by loading 96 parts of an active material NMC532 ($LiNi_{0.5}Mn_{0.3}Co_{0.2}O_2$) based on a lithium complex oxide of Co-Ni-Mn as a positive electrode active material, 2 parts of acetylene black (produced by Denka Company Limited; product name: HS-100) as a conductive material, and 2 parts of polyvinylidene fluoride (produced by Kureha Corporation; product name: KF-1100) as a binder into a planetary mixer, further adding N-methyl-2-pyrrolidone (NMP) as a dispersion medium to adjust the total solid content concentration to 67%, and mixing these materials.

Next, the obtained slurry composition for a positive electrode mixed material layer was applied onto aluminum foil of 20 μm in thickness serving as a current collector by a comma coater such as to have a coating weight of 20 ± 0.5 mg/cm$^2$.

The aluminum foil was conveyed inside an oven having a temperature of 90°C for 2 minutes and an oven having a temperature of 120°C for 2 minutes at a speed of 200 mm/min so as to dry the slurry composition on the aluminum foil and thereby obtain a positive electrode web having a positive electrode mixed material layer formed on the current collector.

Thereafter, the positive electrode mixed material layer-side of the produced positive electrode web was roll pressed with a line pressure of 14 t (tons) in an environment having a temperature of 25 ± 3°C to obtain a positive electrode having a positive electrode mixed material layer density of 3.20 g/cm$^3$.

<Production of lithium ion secondary battery>

The post-pressing positive electrode and negative electrode and the heat-resistant layer-equipped separator obtained as described above were each cut out. A surface at the heat-resistant layer-side of the cut-out heat-resistant layer-equipped separator was arranged facing the positive electrode mixed material layer of the cut-out post-pressing positive electrode. Moreover, a surface of the negative electrode mixed material layer of the cut-out post-pressing negative electrode was arranged facing an uncoated surface of the arranged heat-resistant layer-equipped separator (surface not in contact with the positive electrode) so as to obtain a battery member laminate (positive electrode/heat-resistant layer/separator substrate/negative electrode).

Next, the obtained laminate was enclosed in an aluminum packing case serving as a battery case, and electrolyte solution (solvent: ethylene carbonate (EC)/diethyl carbonate (DEC) = 30/70 (volume ratio); electrolyte: $LiPF_6$ of 1 mol/L in concentration; additive: 2 volume% vinylene carbonate (solvent ratio)) was injected such that no air remained. Next, an opening of the aluminum packing case was heat sealed at a temperature of 150°C to tightly close the aluminum packing case and thereby produce a 40 mAh stacked lithium ion secondary battery.

This lithium ion secondary battery was used to evaluate high-temperature cycle characteristics. The result is shown in Table 1.

(Examples 2 and 4)

Various operations, measurements, and evaluations were performed in the same way as in Example 1 with the exception that in production of a water-soluble polymer, the amounts of compounded monomers were changed such that the proportional contents of monomer units in the obtained water-soluble polymer were as shown in Table 1. The results are shown in Table 1. The water-soluble polymers produced in these examples are denoted as water-soluble polymer B in Example 2 and water-soluble polymer D in Example 4.

(Example 3)

Various operations, measurements, and evaluations were performed in the same way as in Example 1 with the exception that in production of a water-soluble polymer, the amount of ammonium persulfate as a polymerization initiator was reduced such that the weight-average molecular weight and the 10% molecular weight of the obtained water-soluble polymer C were as shown in Table 1. The results are shown in Table 1.

(Examples 5 and 6)

Various operations, measurements, and evaluations were performed in the same way as in Example 1 with the exception that in production of a slurry composition for a functional layer, boehmite particles (produced by Nabaltec AG; product name: ACTILOX 200SM; volume-average particle diameter: 0.30 $\mu$m; BET specific surface area: 17 m$^2$/g) were compounded as inorganic particles in Example 5 and barium sulfate particles (produced by Takehara Kagaku Kogyo Co., Ltd.; product name: TS-2; volume-average particle diameter: 0.36 $\mu$m; BET specific surface area: 7.5 m$^2$/g) were compounded as inorganic particles in Example 6. The results are shown in Table 1.

(Example 7)

Various operations, measurements, and evaluations were performed in the same way as in Example 1 with the exception that in production of a water-soluble polymer, the amounts and/or types of compounded monomers were changed such that the proportional contents of monomer units in the obtained water-soluble polymer were as shown in Table 1. The results are shown in Table 1. The produced water-soluble polymer is denoted as water-soluble polymer E.

(Comparative Example 1)

Various operations, measurements, and evaluations were performed in the same way as in Example 1 with the exception that in production of a water-soluble polymer F, the amounts of compounded monomers were changed such that the proportional contents of monomer units in the obtained water-soluble polymer were as shown in Table 1. The results are shown in Table 1.

(Comparative Example 2)

Various operations, measurements, and evaluations were performed in the same way as in Example 7 with the exception that in production of a water-soluble polymer G, the amounts of compounded monomers were changed such that the proportional contents of monomer units in the obtained water-soluble polymer were as shown in Table 1, and the amount of ammonium persulfate as a polymerization initiator was reduced and the polymerization temperature was increased such that the weight-average molecular weight and the 10% molecular weight of the obtained water-soluble polymer G were as shown in Table 1. The results are shown in Table 1.

Note that in Table 1, shown below:

"Aam" indicates acrylamide unit;
"AA" indicates acrylic acid unit;
"DADMAC" indicates diallyldimethylammonium chloride unit;
"AN" indicates acrylonitrile unit; and
"EO/PO" indicates ethylene oxide/propylene oxide copolymer.

[Table 1]

| | | | | Example 1 | Example 2 | Example 3 | Example 4 | Example 5 | Example 6 | Example 7 | Comparative Example 1 | Comparative Example 2 |
|---|---|---|---|---|---|---|---|---|---|---|---|---|
| Slurry composition for functional layer | Water-soluble polymer | Type of water-soluble polymer | | Water-soluble polymer A | Water-soluble polymer B | Water-soluble polymer C | Water-soluble polymer D | Water-soluble polymer A | Water-soluble polymer A | Water-soluble polymer E | Water-soluble polymer F | Water-soluble polymer G |
| | | Chemical composition | Amide group-containing monomer unit / Type | Aam | Aam | Aam | Aam | Aam | Aam | Aam | Aam | Aam |
| | | | Amide group-containing monomer unit / Proportional content [mass%] | 83.0 | 81.0 | 83.0 | 91.0 | 83.0 | 83.0 | 90.0 | 70.0 | 79.0 |
| | | | Ionic group-containing monomer unit / Type | DADMAC | DADMAC | DADMAC | DADMAC | DADMAC | DADMAC | AA | DADMAC | AA |
| | | | Ionic group-containing monomer unit / Proportional content [mass%] | 17.0 | 17.0 | 17.0 | 9.0 | 17.0 | 17.0 | 100 | 30.0 | 21.0 |
| | | | Other monomer unit / Type | - | AN | - | - | - | - | - | - | - |
| | | | Other monomer unit / Proportional content [mass%] | 0.0 | 20 | 0.0 | 0.0 | 0.0 | 0.0 | 0.0 | 0.0 | 0.0 |
| | | Weight-average molecular weight (Mw) [-] | | 326,000 | 355,000 | 634,000 | 372,000 | 326,000 | 326,000 | 374,000 | 401,000 | 2,000,000 |
| | | 10% molecular weight [-] | | 32,000 | 36,000 | 76,000 | 33,000 | 32,000 | 32,000 | 36,000 | 39,000 | 130,000 |
| | | Storage elastic modulus $E^5$ [Pa] (50°C, RH 5%) | | $7.0 \times 10^8$ | $6.8 \times 10^8$ | $7.2 \times 10^8$ | $7.6 \times 10^8$ | $7.0 \times 10^8$ | $7.0 \times 10^8$ | $1.1 \times 10^9$ | $5.8 \times 10^8$ | $8.1 \times 10^8$ |
| | | Rate of change of storage elastic modulus [-]: $(E^5 - E^{50})/E^5$ | | 0.980 | 0.980 | 0.980 | 0.942 | 0.990 | 0.980 | 0.690 | 0.991 | 0.581 |
| | | Glass-transition temperature [°C] | | 166 | 161 | 168 | 193 | 166 | 166 | 182 | 131 | 178 |
| | | Amount [parts by mass] | | 2.5 | 2.5 | 2.5 | 2.5 | 2.5 | 2.5 | 2.5 | 2.5 | 2.5 |

(continued)

| | | | Example 1 | Example 2 | Example 3 | Example 4 | Example 5 | Example 6 | Example 7 | Comparative Example 1 | Comparative Example 2 |
|---|---|---|---|---|---|---|---|---|---|---|---|
| Inorganic particles | | Type | Alumina | Alumina | Alumina | Alumina | Boehmite | Barium sulfate | Alumina | Alumina | Alumina |
| | | Volume-average particle diameter [$\mu$m] | 0.42 | 0.42 | 0.42 | 0.42 | 0.30 | 0.36 | 0.42 | 0.42 | 0.42 |
| | | BET specific surface area [$m^2$/g] | 4.6 | 4.6 | 4.6 | 4.6 | 17 | 7.5 | 4.6 | 4.6 | 4.6 |
| | | Amount [parts by mass] | 100 | 100 | 100 | 100 | 100 | 100 | 100 | 100 | 100 |
| Surfactant | | Type | EO/PO | EO/PO | EO/PO | EO/PO | EO/PO | EO/PO | EO/PO | EO/PO | EO/PO |
| | | Amount [parts by mass] | 0.2 | 0.2 | 0.2 | 0.2 | 0.2 | 0.2 | 0.2 | 0.2 | 0.2 |
| Viscosity [mPa·s] | | | 180 | 185 | 210 | 170 | 190 | 170 | 165 | 160 | 500 |
| Evaluation | Dispersion stability of slurry composition for functional layer | | A | A | A | B | A | A | A | C | B |
| | Heat shrinkage resistance of functional layer | | A | A | B | A | A | A | A | B | C |
| | Water content of functional layer | | A | A | A | B | B | A | B | C | B |
| | High-temperature cycle characteristics of secondary battery | | A | A | A | A | A | A | A | C | B |

It can be seen from Table 1 that it was possible to form a functional layer having low water content and excellent heat resistance in Examples 1 to 7 in which a functional layer was formed using a binder composition for a non-aqueous secondary battery functional layer containing a water-soluble polymer that had a 10% molecular weight of 100,000 or less and that had a storage elastic modulus $E^5$ at a temperature of 50°C and a relative humidity of 5% and a storage elastic modulus $E^{50}$ at a temperature of 50°C and a relative humidity of 50% that satisfied a specific relationship.

In contrast, it can be seen that a functional layer having low water content and excellent heat resistance could not be formed in Comparative Example 1 in which a functional layer was formed using a binder composition for a non-aqueous secondary battery functional layer containing a water-soluble polymer that had a value exceeding 0.990 for $(E^5 - E^{50})/E^5$ and in Comparative Example 2 in which a functional layer was formed using a binder composition for a non-aqueous secondary battery functional layer containing a water-soluble polymer that had a value exceeding 100,000 for 10% molecular weight.

INDUSTRIAL APPLICABILITY

According to the present disclosure, it is possible to provide a binder composition for a non-aqueous secondary battery functional layer and a slurry composition for a non-aqueous secondary battery functional layer that can form a functional layer having low water content and excellent heat resistance.

Moreover, according to the present disclosure, it is possible to provide a functional layer that has low water content and excellent heat resistance and a non-aqueous secondary battery member that includes this functional layer.

Furthermore, according to the present disclosure, it is possible to provide a non-aqueous secondary battery that includes a non-aqueous secondary battery member including a functional layer having low water content and excellent heat resistance.

**Claims**

1. A binder composition for a non-aqueous secondary battery functional layer comprising a water-soluble polymer, wherein

   the water-soluble polymer has a 10% molecular weight of 100,000 or less, and
   the water-soluble polymer satisfies formula (1), shown below,

$$0.300 \le (E^5 - E^{50})/E^5 \le 0.990 \cdots (1)$$

   given that $E^5$ is a storage elastic modulus of the water-soluble polymer at a temperature of 50°C and a relative humidity of 5% and $E^{50}$ is a storage elastic modulus of the water-soluble polymer at a temperature of 50°C and a relative humidity of 50%.

2. The binder composition for a non-aqueous secondary battery functional layer according to claim 1, wherein the water-soluble polymer has a weight-average molecular weight of 700,000 or less.

3. The binder composition for a non-aqueous secondary battery functional layer according to claim 1, wherein the water-soluble polymer includes an amide group-containing monomer unit.

4. The binder composition for a non-aqueous secondary battery functional layer according to claim 1, wherein the water-soluble polymer has a glass-transition temperature of 150°C or higher.

5. The binder composition for a non-aqueous secondary battery functional layer according to claim 1, wherein the storage elastic modulus $E^5$ has a value of $3 \times 10^8$ Pa or more.

6. The binder composition for a non-aqueous secondary battery functional layer according to claim 1, wherein the water-soluble polymer includes a monomer unit including an ionic functional group.

7. The binder composition for a non-aqueous secondary battery functional layer according to claim 6, wherein the ionic functional group is a cationic group of a quaternary ammonium salt.

8. A slurry composition for a non-aqueous secondary battery functional layer comprising: inorganic particles having a volume-average particle diameter of not less than 0.05 $\mu$m and not more than 0.50 $\mu$m; a solvent; and the binder composition for a non-aqueous secondary battery functional layer according to any one of claims 1 to 7.

9. The slurry composition for a non-aqueous secondary battery functional layer according to claim 8, wherein the inorganic particles have a specific surface area of not less than 3.5 m$^2$/g and not more than 20 m$^2$/g.

10. A functional layer for a non-aqueous secondary battery formed using the slurry composition for a non-aqueous secondary battery functional layer according to claim 8.

11. A non-aqueous secondary battery member comprising the functional layer for a non-aqueous secondary battery according to claim 10.

12. A non-aqueous secondary battery comprising the non-aqueous secondary battery member according to claim 11.

## INTERNATIONAL SEARCH REPORT

| International application No. |
| --- |
| **PCT/JP2022/046087** |

**A.    CLASSIFICATION OF SUBJECT MATTER**

*H01M 50/403*(2021.01)i; *H01M 50/42*(2021.01)i; *H01M 50/434*(2021.01)i; *H01M 50/443*(2021.01)i; *H01M 50/446*(2021.01)i; *H01M 50/451*(2021.01)i; *H01M 50/489*(2021.01)i
FI:    H01M50/403 D; H01M50/42; H01M50/434; H01M50/443 M; H01M50/446; H01M50/451; H01M50/489

According to International Patent Classification (IPC) or to both national classification and IPC

**B.    FIELDS SEARCHED**

Minimum documentation searched (classification system followed by classification symbols)

H01M50/403; H01M50/42; H01M50/434; H01M50/443; H01M50/446; H01M50/451; H01M50/489

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2015-162313 A (NIPPON ZEON CO., LTD.) 07 September 2015 (2015-09-07) claims, paragraph [0007], example 1 | 1-5, 8-12 |
| A | claims, paragraph [0007], example 1 | 6-7 |
| A | JP 2019-102453 A (SK INNOVATION CO., LTD.) 24 June 2019 (2019-06-24) | 1-12 |
| A | JP 2019-57488 A (ARAKAWA CHEM. IND. CO., LTD.) 11 April 2019 (2019-04-11) | 1-12 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 January 2023** | **31 January 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/046087**

| Patent document cited in search report | | | Publication date (day/month/year) | Patent family member(s) | | | Publication date (day/month/year) |
|---|---|---|---|---|---|---|---|
| JP | 2015-162313 | A | 07 September 2015 | (Family: none) | | | |
| JP | 2019-102453 | A | 24 June 2019 | US | 2019/0165349 | A1 | |
| | | | | DE | 102018130080 | A1 | |
| | | | | KR | 10-2019-0062924 | A | |
| | | | | CN | 109841784 | A | |
| JP | 2019-57488 | A | 11 April 2019 | CN | 108666499 | A | |
| | | | | KR | 10-2018-0109740 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011002016 A1
- WO 2015122322 A1
- JP 2018026266 A
- JP 2019057486 A